# EUROPEAN PATENT SPECIFICATION

(11) **EP 0 496 097 B1**
(45) Date of publication and mention of the grant of the patent: **29.01.1997**
(21) Application number: 91122049.9
(22) Date of filing: 21.12.1991
(51) Int. Cl.: G05B 19/05

(54) **Programmable controller processor for concurrently executing multiple user control programs**
Programmierbarer Steuerungsprozessor für gleichzeitig auszuführende Mehrfachbenutzersteuerungsprogramme
Processeur d'automate programmable pour l'exécution concourant d'un multiple de programmes de commande d'utilisateurs

(30) Priority: 26.12.1990 US 634254
(43) Date of publication of application: 29.07.1992
(73) Proprietor: ALLEN-BRADLEY COMPANY, INC., Milwaukee Wisconsin 53204 (US)
(72) Inventor: Yoke, Michael D., Mentor, Ohio 44060 (US); Westman, Donald A., Mentor, Ohio 44060 (US); Rohn, David R., Willoughby Hills, Ohio 44092 (US)
(74) Representative: Lippert, Hans, Dipl.-Ing.

(56) References cited:
- DE-A- 3 610 433
- US-A- 3 886 528
- COMPUER TECHNOLOGY REVIEW vol. 7, no. 16, 1987, LOS ANGELES, CA, USA pages 12 - 15; J. BRAMLET & BRENNER: 'REAL TIME, MULTIUSER JOB SCHEDULERS CAN MAXIMIZE PERFORMANCE'
- MACHINE DESIGN vol. 59, no. 7, 9 April 1987, CLEVELAND OHIO, USA pages 133 - 137; R.W. CARDOZA: 'THE PERILS AND PAYOFFS OF REAL-TIME CONTROL'
- IBM TECHNICAL DISCLOSURE BULLETIN vol. 30, no. 2, July 1987, ARMONK, NEW YORK, USA pages 635 - 637; 'MULTITASKING SYSTEM SUPERVISOR'

## Description

The present invention relates to programmable controllers for operating industrial equipment, and more specifically to the processors for such programmable controllers which execute user defined control programs.

### Background of the Invention

Programmable controllers are a common type of industrial computer for operating a wide variety of manufacturing equipment, such as assembly lines and machine tools, in accordance with a stored control program. The program comprises a series of process control instructions which are read out and executed to examine the condition of selected sensing devices on the controlled equipment, and to energize or deenergize selected operating devices contingent upon the status of one or more of the examined sensing devices.

The state of many sensing and operating devices can be represented by a single bit of data which is manipulated by the control program instructions. Other devices, such as position sensors, provide multiple bits of data representing a condition of the equipment being controlled. For these latter devices, instructions are provided to manipulate bytes and words of data representing the state of the sensing and operating devices. Additional program instructions perform arithmetic operations, timing and counting functions, and complex statistical reporting operations. Such instructions have become quite standardized in the industry and are directly associated with the elements of a ladder logic diagram which is easily understood by process control engineers. Program panels such as those described in U.S. Patent Nos. 3,808,612; 3,813,649 and 4,070,702 have been developed to assist the user in developing and editing ladder logic control programs comprised of such programmable controller instructions.

An elaborate manufacturing process often is broken down into a series of smaller tasks, each defined by a separate ladder logic control program. The overall process is defined by a function chart specifying the order in which these tasks are to be performed and thereby the execution sequence of the corresponding ladder logic control programs. The use of a function chart in a programmable controller is described in U.S. Patent No. 4,742,443 entitled "Programmable Controller with Function Chart Interpreter", which description is incorporated herein by reference.

As programmable controllers were applied to more complex manufacturing systems, multiple controllers were used to govern the operation of different portions of the system with each one executing a separate control program. In such applications, it becomes necessary for one programmable controller to exchange data regarding the manufacturing process with the other programmable controllers. Although techniques have been developed to communicate data among the programmable controllers, the coordination of several of these devices can become rather complex and complicated. In addition the duplication of hardware for each section of the manufacturing system is expensive, especially since programmable controllers have increased in speed and are capable of handling other tasks while executing the control program for a given section.

Although faster controllers permit background tasks, such as production reporting, to be performed interleaved in time with execution of the user defined machine control program, only one machine control program at a time was active and executing. Thus, mechanisms did not exist which enabled several machine control programs for different pieces of equipment to reliably execute simultaneously on the same programmable controller.

### Summary of the Invention

Programmable controllers include a processor section to execute instructions of stored control programs. Sensing and operating devices of the controlled equipment are commonly connected to a plurality of input and output modules that are electrically coupled to the processor section. The processor module executes a series of user defined control programs which examine the status of selected sensing devices and sets the state of the actuating devices in accordance with the examined status based on the logical operations defined by the control program.

The processor section of a programmable controller according to the present invention which is defined by claim 1 contains a memory for storing a list of control program identifiers in the order in which the programs are to be executed. The control programs are sequentially selected for execution in a round robin manner based on the order of the program identifiers in the list. The processor section executes the selected control program until a predefined point in the program is reached. In the preferred embodiment, when a sequential function chart program is selected, a section of the program is executed and a transition condition for that section is evaluated. Thereafter, execution of the sequential function chart is suspended and another control program is selected.

Following the suspension of a control program execution the status of the sensing devices are read and control data is sent to the actuating devices. When the last control program identified in the list has been executed, the selection process begins again at the top of the list.

The instant invention is to provides a programmable controller that is able to execute several independent control programs concurrently on a single processor.

Another object of the present invention is to enable a sequential function chart type control program and independent ladder diagram type control programs to execute concurrently.

A further object is to enable a control program to activate and deactivate the execution of other control programs identified in the list. This can be achieved by the control program setting or resetting a flag that indicates whether a given control program specified by the list of control program identifiers should be executed by the processor section. This object can also be achieved by the control program altering the list of control program identifiers, such as by adding, deleting or replacing the identifiers on the list.

Yet another object is to provide a mechanism which enables the user to identify the control programs to be executed concurrently and the frequency at which a portion of each program is to be concurrently executed.

### Brief Description of the Drawings

FIGURE 1 is a perspective view of a programmable controller system employing the present invention;
FIGURE 2 is a functional block diagram of a processor module which forms part of the controller of Figure 1;
FIGURE 3 is a memory map of part of the shared system memory in the processor module;
FIGURE 4 depicts data tables that are incorporated into the status file in the shared system memory in order to practice the present invention;
FIGURES 5A and 5B form a flowchart of the portion of the processor's operating system that enables multiple control programs to be run in a time interleaved manner; and
FIGURE 6 is an exemplary sequential function chart type control program.

### Detailed Description of the Invention

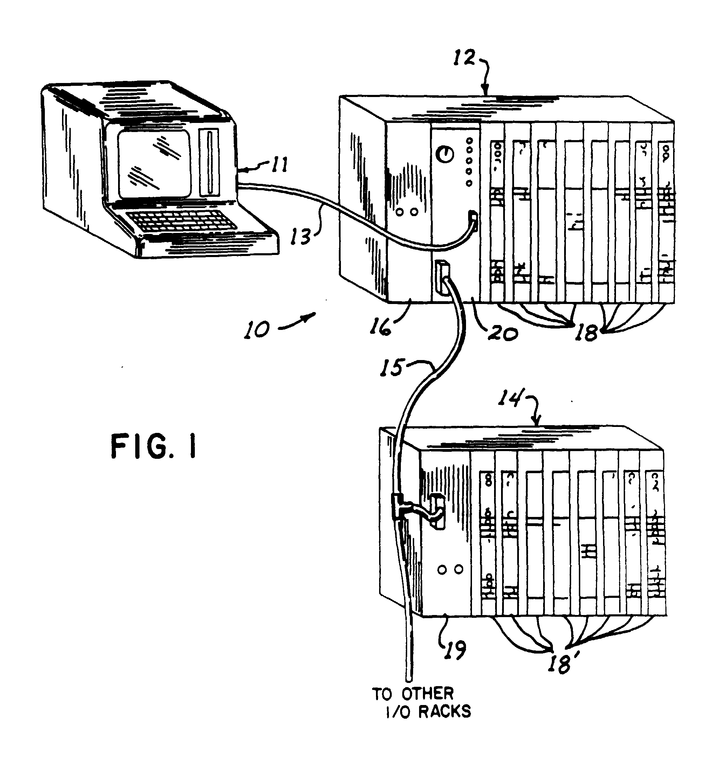

Referring to Figure 1, a programmable controller system generally designated as 10 comprises a primary equipment rack 12 and a series of remote input/output (I/O) racks, such as rack 14, interconnected by a serial I/O network 15.

The primary rack 12 houses a power supply 16, processor module 20 and a plurality of input/output interface modules 18. The various modules 18 and 20 within the primary rack 12 are electrically interconnected by conductors on a backplane of the rack enabling data and control signals to be exchanged among the modules. The processor module 20 executes user-defined main control programs that respond to signals from sensing devices on the controlled equipment by issuing signals to actuating devices on the same equipment. The sensing and actuating device signals are transferred between the rack 12 and the controlled equipment through the input/output interface modules 18.

The processor module 20 receives programming instructions via a terminal 11 that is connected by cable 13 to a serial port connector on the front panel of the module. The I/O network 15 is coupled to another connector on the front panel of the processor module 20 and to an adaptor module 19 in the remote I/O rack 14, enabling the processor module 20 to exchange data with another group of I/O modules 18' within the remote I/O rack. Other ports can be provided on the processor module to connect with additional I/O networks or with a local area network to exchange data with a host computer.

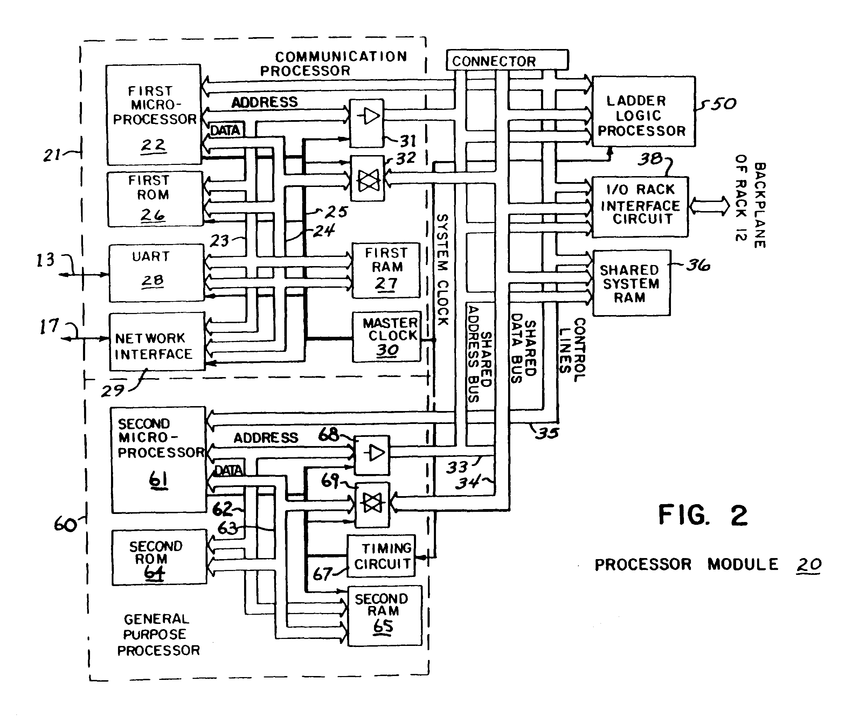

With reference to Figure 2, the processor module 20 includes a general purpose processor 60 for user control program execution and a communication processor 21 to handle the exchange of data over cable 13 and I/O network 15. However, the communication processor 21 can be configured to interface to either a local area network or an I/O network. As will be described in detail, each of these sections 21 and 60 of the processor module has its own microprocessor and memory coupled by an isolatable set of address, data and control buses. The processor module 20 also has a set of shared buses 33-35 which connect sections 21 and 60 to other data processing and storage components.

A communication processor 21 is formed around a local address bus 23 and a local data bus 24. Coupled to these buses is a first microprocessor 22 which executes a program stored in a read only memory (ROM) 26 and utilizes a random access memory (RAM) 27 as a scratch-pad for temporary data storage. A master clock circuit 30 provides a system clock signal for other components within the processor module 20 as well as providing specific timing signals via control lines 25 to the components of the communication processor 21.

The primary function assigned to the first microprocessor 22 is the control of communication with the programming terminal 11 and the I/O network 15. A universal asynchronous receiver/ transmitter (UART) 28 couples the local address and data buses 23 and 24 to the terminal via cable 13. The UART 28 is any of several commercially available devices which interface the parallel data format within the processor module to a serial communication format for communicating with the terminal 11. Although the module port from the UART 28 is illustrated as connected to the programming terminal 11, this port can be coupled to many other types of serial devices for the exchange of data with the processor module 20. The local address and data buses 23 and 24 are coupled to a network interface 29 so that the first microprocessor 22 can transmit and receive data over network 15 with the remote I/O racks 14. The first network interface converts the parallel data within the processor module 20 into a serial formatted message packet which is compatible with the protocol employed to communicate with the remote I/O racks 14.

The communication processor 21 is connected to other processor module sections through a set of tri-state address gates 31 and a set of bidirectional tri-state data gates 32. Specifically, the set of gates 31 couples the local address bus 23 to the module's shared address bus 33, and the set of data gates 32 couples the local data bus 24 to a shared data bus 34. A set of control lines 35 extend between processor module components and hereinafter is referred to as a control bus.

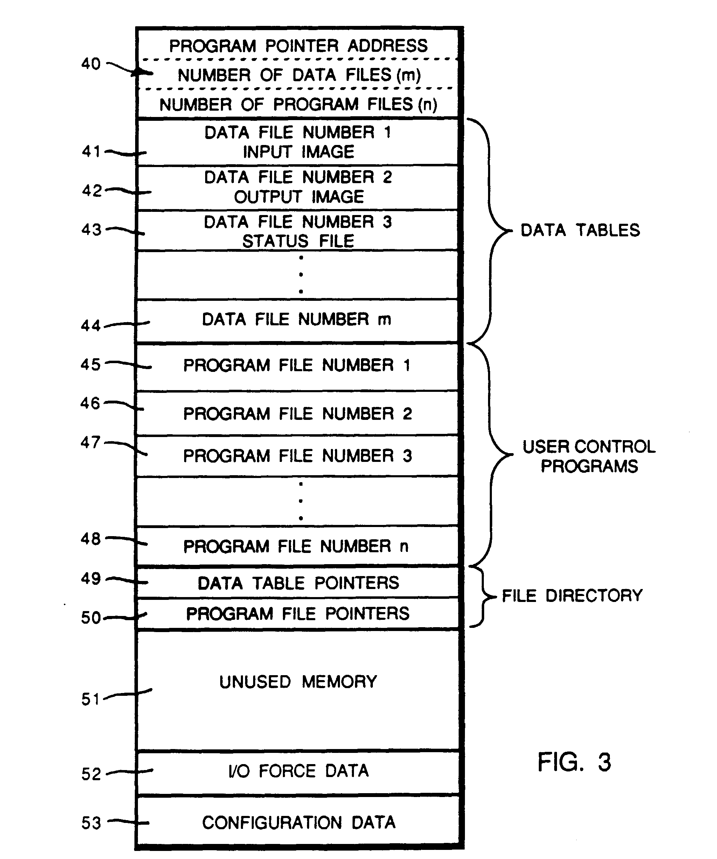

This connection of buses allows the first microprocessor 22 to write and read data to and from a shared system RAM 36 coupled to the shared address and data buses 33 and 34. The organization of data within the shared system RAM 36 is illustrated in Figure 3. A first group of storage locations 40 contain the address of storage location in block 50 which holds the program file pointer and contains the number (n) of program files. A block of shared system RAM storage locations contains a conventional set of data table files 41-44 for the processor module 20. The first of these data tables 41 stores input data representing the state of the sensing devices coupled to the controlled equipment. Data from input type I/O modules 18 in the primary and remote racks 12 and 14 are stored in an organized manner in this table 41. A second data table file 42 stores output data representing the state of the actuating devices on the equipment which are operated by the programmable controller system 10. Using a similar organization, the output table 42 stores the data employed to control the actuating devices connected to output type I/O modules 18 in racks 12 and 14. Another data file 43 contains information regarding the status of the programmable controller 20 and its components. As will be described, this file 43 also contains a table of control programs designated for execution by the processor module. If necessary, additional data files can be stored in the shared system RAM 36.

Another section of the shared system RAM 36 stores the user-defined main control program files 45-48 for governing the operation of controlled equipment. Depending upon the specific programs provided by the user, the program files can store a number of different types of control programs. For example, a number of independently executable ladder logic type control programs may be stored in this section of the shared system RAM 36. Similarly, these program files 45-48 can store sequential function charts and separate a control program for each step of the function chart. After the program file area in RAM 36 is a file directory containing a section 49 with pointers to each data file 41-44, and a section 50 with pointers to the program files 45-48. Following the file directory is a area of unused memory locations 45.

The shared system RAM 36 also contains an I/O force data table 46, similar to that used in previous programmable controllers to force the control data from specific sensing or actuating devices to a given logic state. A final memory section 47 at the high addresses of the shared system RAM 36 is used to contain system, processor module, and microprocessor level configuration data. For example, the configuration data defines the I/O port parameters and protocol communication. The organization of the sections of the shared system RAM 36 is not critical and may vary from that depicted in Figure 3.

Referring again to Figure 2, an I/O rack interface circuit 38 is connected to the shared address and data buses 33 and 34 and the backplane of primary rack 12. This interface circuit periodically scans the I/O modules 18 in the primary rack to gather input data from the sensors and send output data to the actuating devices on the controlled equipment. The scanning is accomplished in a manner similar to that employed by previous processor modules by sequentially sending control signals to each I/O module. These control signals cause input type modules to send sensor data over the backplane and cause output type modules to store data sent by the processor module. The data exchanged with the I/O modules 18 in the primary rack 12 are stored in the I/O data tables 41 and 42 of the shared system RAM 36

A ladder logic processor 50 is also coupled to the shared address and data buses 33 and 34. The vast majority of ladder type control program instructions operate on a single bit or word (i.e. 16 bits) of data. The ladder logic processor 50 has been designed to execute the subset of ladder type instructions which perform these basic data processing operations. This not only provides efficient execution of these instructions, it also frees the microprocessors in the module 20 to carry out other functions simultaneously with the control program execution.

Some complex operations cannot be performed by the ladder logic processor 50 and are executed by the general purpose processor 60. In addition to performing the complex ladder logic operations, the general purpose processor also interprets a sequential function chart when one has been programmed by the user. This latter section of the processor module 10 contains a second microprocessor 61 connected to its own isolated set of address and data buses 62 and 63, respectively. This pair of buses 62 and 63 couples the second microprocessor 61 to a second ROM 64 and a second scratch-pad random access memory 65 within the general purpose processor 60. The second ROM 64 stores the firmware which is executed by the second microprocessor 61 to carry out the complex ladder logic operations.

A timing circuit 67 receives the system clock signal and derives therefrom the necessary timing and control signals for the second microprocessor 61 and associated memories 64 and 65. A pair of tri-state transmission gates 68 and 69 isolate address and data buses 62 and 63, respectively of the general purpose processor 60 from the shared address and data buses 33 and 34. When these gates 68 and 69 are enabled in response to a command from the second microprocessor 61, the internal set of buses 62 and 63 are electrically connected to shared buses 33 and 34. This enabling occurs only when the second microprocessor 61 requires access to the shared system memory and has been granted use of the shared buses 33 and 34 by an arbitration circuit in the ladder logic processor 50.

The hardware for the programmable controller 10 is similar to that in previous devices. However, its operating system enables multiple main control programs to be active simultaneously, executing concurrently to control the equipment. As used herein, a main control program is one which is intended to be executed independently of other user-defined programs and which governs the operation of the equipment being controlled by the programmable controller 10. As such a main control program reads the status of sensing devices on the equipment and sets the state of actuating devices. A main control program (MCP) can be a sequential function chart with a ladder logic program for each chart step. In such cases, these ladder logic programs are executed according to the sequence of steps defined by the function chart and not independently. A main control program also can be an individual ladder logic control program that executes independently, i.e. not associated with a sequential function chart. A control program written in another language can also be classified as a main control program.

The group of main control programs which are configured to execute concurrently on the processor module 20 may control the functions of separate pieces of manufacturing equipment in which each piece functions in an unrelated manner to the operation of the other pieces of manufacturing equipment. Alternatively, the main control programs could be used to govern different sections of a larger manufacturing system in which each section's operation affects the operation of other sections.

Each main control program, whether a ladder logic control program, a sequential function chart or another type, is written on terminal 11 using conventional authoring software. Such software permits the ladder diagram or function chart to be graphically created on the screen of the terminal. From the graphical representation created by the user, the authoring software produces program files containing a series of instructions to be executed by the processor module 20. The files for the main control programs are downloaded from the terminal 11 into the shared system RAM 36 where they are stored in the user control program area.

The terminal 11 also is used to designate up to sixteen main control programs for concurrent execution by the processor module 20, although a greater or lesser number may also be accommodated within the broad concept of the present invention. Another software routine within the terminal reads the program file directory from section 50 of the shared system RAM 36 (depicted in Figure 3) and displays the file names on a terminal screen. The user then uses the keyboard of the terminal to choose the main control programs for execution. In doing so, the terminal prompts the user to select sixteen main control programs, designated A-P. After the user has made each selection, the corresponding file number for that program is stored in a table in the status file 43 stored in the shared system RAM 36 of the processor module 20. A program executing on the processor module 20 is able to access the MCP execution table and alter the program file entries by adding, deleting and replacing main control program in much the same manner that the program is able to alter other tables in the shared system RAM 36.

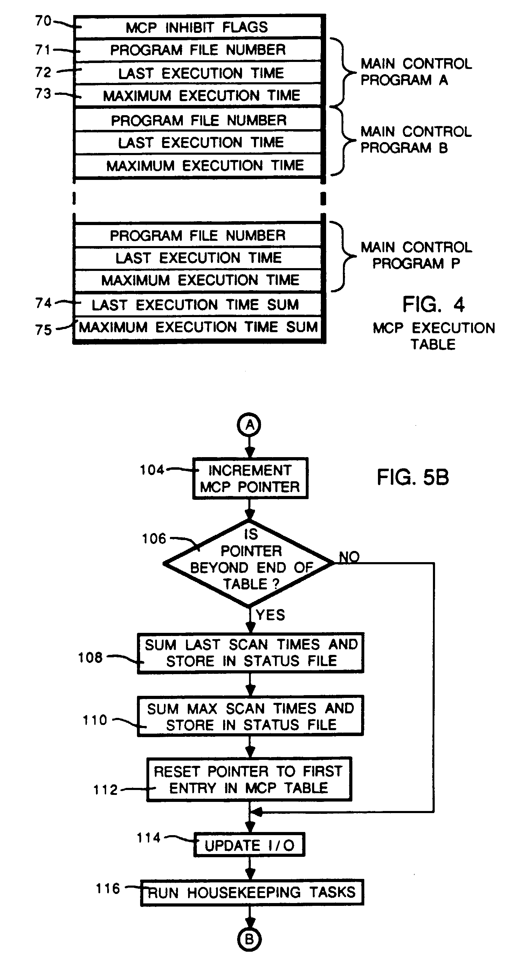

This portion of the status file is referred to as the "MCP execution table" and is depicted in Figure 4. Each of the sixteen main control program entries A-P in this table is three words long. The first word 71 of each entry contains the program file number identifying the main control program. The next two words 72 and 73 are initially blank and are filled in by an MCP scheduler routine which controls the execution of the main control programs. As will be described in detail, the second word (LAST SCAN TIME) of each main control program entry contains a measurement of the duration of the last execution period for that program, and the third word (MAXIMUM SCAN TIME) contains the measurement of the program's longest execution period. As the user is afforded the opportunity of designating each of the main control programs A-P within the MCP execution table, a given program may be entered in the table more than once so as to execute multiple times during each round through the table. In addition, different types of main control programs can be listed in the same MCP execution table. For example, some of the programs may be independent ladder logic control programs while others may be sequential function chart programs. In addition, programs written in other languages may also be listed for concurrent execution.

If less than sixteen main control programs are desired to execute concurrently, the first word 71 of the remaining entries in the MCP execution table of Figure 4 will have an entry indicating that no program file is designated. For example, a zero program file number may be used to fill in entries which do not identify a master control program to execute. Even when a specific entry in the execution table identifies a program file to be executed, the execution can be disabled by setting a flag bit in the first word 70 of the MCP execution table. Each of the sixteen bits in this first word 70 is an MCP inhibit flag corresponding to one of the sixteen possible main control program entries A-P in the execution table. A "One" flag bit indicates that the corresponding main control program is not to be executed, whereas a "Zero" bit enables execution of that program. The MCP inhibit flags can be set and reset by instructions in the main control programs just as such programs can set and reset bits in other data files in the shared system RAM 36. During configuration of the MCP execution table, the user can manually set or reset the MCP inhibit flags for specific entries in that execution table.

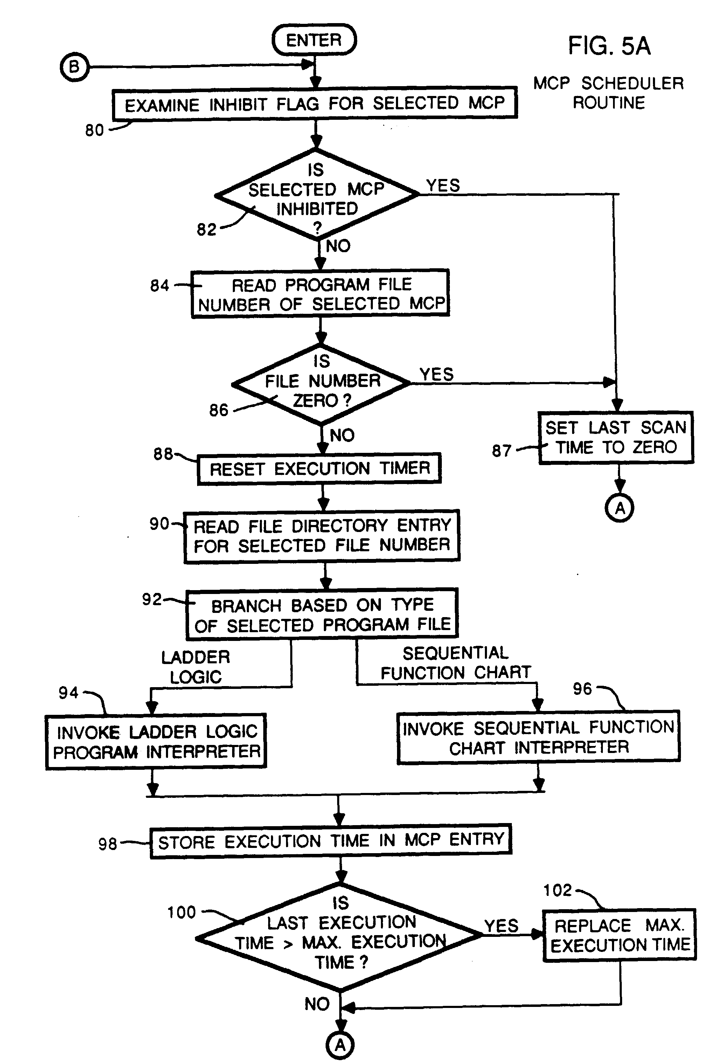

Once the user has written and stored all of the main control programs and configured the MCP execution table, the processor module 20 can be placed in the run mode in which it begins executing the MCP scheduler routine depicted in the flowchart of Figures 5A and 5B. The MCP scheduler routine is executed by the second microprocessor 61 which stores a pointer within second RAM 65 indicating which one of the main control programs A-P in the MCP execution table is currently executing. All of the active main control programs listed in the MCP execution table can be executing concurrently so as to be all operating the controlled equipment at the same time. Although the plurality of active main control programs designated in this table are described as concurrently executing, one will appreciate that at any given instant of time, an instruction for only one of the main control programs is actually being executed by the processor module 20. However, all of the active programs designated in the MCP execution table are being executed concurrently in a unique time interleaved manner, as will be described with respect to the operation of the MCP scheduler routine.

Initially at step 80 in the MCP scheduler routine, the second microprocessor 61 reads the inhibit flag bit from word 70 within the MCP execution table for the main control program designated by the pointer stored in second RAM 65. The flag is tested to determine if the selected main control program is enabled at step 82. If the flag bit is set indicating that the selected main control program is not to be executed, the LAST SCAN TIME in the second word 72 of its MCP execution table entry is set to zero at step 87. Then the MCP scheduler routine jumps to step 104 (Figure 5B) to advance to the next program in the MCP execution table. However, assuming that the flag tested at step 82 indicates that the selected main control program is enabled, the execution of the MCP scheduler routine advances to step 84 where the program file number for the selected main control program is read by the second microprocessor 81 from the entry in the MCP execution table. This file number then is tested at step 86 to determine if it is zero, which indicates that no program is designated at this table entry. If the file number is zero, the LAST SCAN TIME for this program is set to zero in the MCP execution table at step 87 before the program execution jumps to step 104 to advance to the next program entry in the MCP execution table.

Assuming that a valid file number is found at step 86, the MCP scheduler routine execution advances to step 88 where the second microprocessor 61 resets a program execution timer within its timing circuit 67 to provide a mechanism for measuring the duration of the execution of the selected main control program. The second microprocessor 61 then uses the file number of the selected main control program to read the file directory in section 50 of the shared system RAM 36 (as shown in Figure 3). Among other information in this directory is an indication of the type of program that is to be executed. For example, this program may either be a ladder logic type program or a sequential function chart. Using this file type designation, the program execution then branches at step 92 to either of two parallel program branches based on the type of program. As noted previously, the processor module 20 can be set up to execute other types of main control programs, in which case additional parallel branches are provided between steps 92 and 98 in the MCP scheduler routine.

If the main control program selected for execution is a ladder logic type program, the program execution branches to step 94 where the second microprocessor 61 calls a conventional ladder logic program interpreter routine. The file number of the selected main control program is passed to the interpreter routine which accesses the program stored in the shared system RAM 36 and begins executing its instructions at the top of the ladder. As noted previously, most of the ladder logic type instructions will be executed by the ladder logic processor 50.5 However, relatively complex ladder logic instructions typically are executed by the second microprocessor 61. As with standard programmable controllers, each rung of the ladder logic program is executed in the designated sequence until the bottom of the ladder is reached. At the completion of one scan down the ladder logic type program, the interpreter routine called at step 94 suspends further execution of the main control program and returns to the MCP scheduler routine which advances to step 98. This is in contrast to conventional execution of ladder logic programs which then return from the bottom to the top of the ladder for another execution scan through the control program.

Alternatively, if at step 92 selected main control program is a sequential function chart, the execution of the MCP scheduler routine branches to step 96 where a sequential function chart interpreter routine is called by the second microprocessor 61. This type of interpreter routine is similar to that described in U.S. Patent No. 4,742,443. Conventional sequential function chart interpreters immediately advance from one chart section to the next in the specified sequence when a transition condition linking the two sections is satisfied. However, calling the sequential function chart interpreter at step 96 causes only a single section of the chart to be executed. After one execution scan through the active section of the function chart and the transition condition is evaluated, the interpreter routine returns to the MCP scheduler routine. Thus, each time a sequential function chart main control program is selected for execution, only one section of the chart is executed which allows portions of the other main control programs to execute between each section of the sequential function chart.

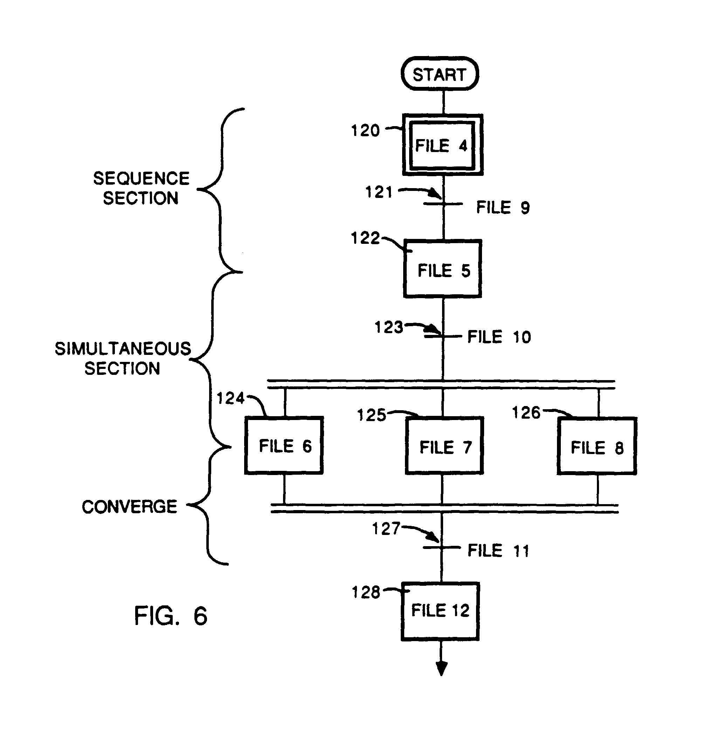

Figure 6 graphically illustrates an exemplary sequential function chart comprising a series of steps indicated by boxes followed by a transition, conventionally designated by horizontal line passing through the vertical line connecting the steps. Several different sections of a conventional function chart are depicted. For example, a single function step 122 follows function step 120 in a "sequence section" of the function chart. Following step 122, the program branches to three function steps 124, 125 and 126, all of which are simultaneously executed forming "a simultaneous section" of the function chart. At the completion of the simultaneous section, the program converges to execute a single function step 128. Within each function step box and at each transition is a designation of a program file containing a control program that performs the function for each step of the function chart. Each such control program can be a ladder logic type, but it can be written in another programming language.

When the MCP scheduler routine selects the sequential function chart in Figure 6 for execution, the interpreter routine called at step 96 processes one section of the chart at a time. For example, the interpreter will initially interpret function step 120 by calling the control program stored in program file number 4 for execution. As discussed in the aforementioned patent, if this file is a conventional ladder logic type program, the sequential function chart interpreter will in turn call the ladder logic program interpreter to execute the program in the designated file. At the completion of one execution scan through the ladder logic program, the sequential function chart interpreter routine will advance to transition 121 which is defined by the program stored in file 9.

This transition program then is executed to determine whether the function chart should remain at step 120 or advance to the next section of the chart, step 122. When a determination is made to advance to the next section, the designation of the active function section in a status file for the sequential function chart is changed to the proper section. For example, if the execution is to remain at step 120, the active step designation will remain unchanged, whereas if the sequential function chart is to advance to function step 122, a designation of that function step will be placed in the active step status block. In previous systems that interpreted sequential function charts, once the transition had been evaluated, the interpretation of the sequential function chart continued by executing the designated active step. However, in the current system which concurrently executes multiple master control programs, once a transition program has executed, the sequential function chart interpreter routine returns to the MCP scheduler routine which advances to step 98.

If a simultaneous section of the sequential function chart is being interpreted at step 96 of the MCP scheduler routine, one execution scan of each of the simultaneous steps will be conducted. For example, with reference to the simultaneous section of the exemplary sequential function chart in Figure 6 which consists of function steps 124, 125 and 126, the designated control programs for each of these function steps that are stored in files 6, 7 and 8 of the user control program section of the shared system RAM 36 will be executed. When one execution scan through each of these programs has been completed, the program in file 11 for transition 127 will be executed to determine whether the sequential function chart interpretation should advance from the simultaneous section to the next function step 128. That determination affects the contents of the active step designation in the status file for this sequential function chart. Once that determination has been made, the interpretation of the sequential function chart temporarily terminates by the interpreter returning to the MCP scheduler routine which advances to step 98.

Therefore, in the case of the sequential function chart, only one section of the chart is executed by each call of the sequential function chart interpreter routine at step 96, rather than executing execution through the entire function chart. If the entire function chart was to be executed on each call of the interpreter at step 96, an excessive amount of time would be consumed for this type of main control program to the detriment of the execution of the other main control programs scheduled for execution. Thus, each execution cycle for a sequential function chart is limited to a relatively small portion of the chart so that the execution of the other main control programs will not be adversely affected.

At step 98 of the MCP scheduler routine on Figure 5A, the second microprocessor 61 reads the value of the program execution timer within circuit 67 and stores that value as the LAST SCAN TIME in the second word 72 of the entry in the MCP execution table (Figure 4) for the selected main control program. Then, the LAST SCAN TIME is compared to the MAXIMUM SCAN TIME stored in the third word 73 of the MCP execution table entry. If the just completed execution of the selected main control program exceeded the previous MAXIMUM SCAN TIME, the most recent scan time replaces the MAXIMUM SCAN TIME in the appropriate entry of the MCP execution table at step 102 before advancing to step 104.

At step 104 of Figure 5B, the program pointer is incremented to the next entry in the MCP execution table and the new pointer value is tested at step 106 to determine if it is beyond the end of the table. If the pointer is still within the MCP execution table, the execution of the MCP scheduler routine jumps to step 114.

If, however, the program pointer is beyond the end of the MCP execution table, the program execution advances to step 108. At this point, the second microprocessor 61 sums the LAST SCAN TIME for each of the active MCP and stores the total in word 74 of the MCP execution table within the status file 43 of shared system RAM 36. Similarly, at step 110, the second microprocessor 61 computes the sum of the MAXIMUM SCAN TIME for each entry in the MCP execution table and stores that total in word 75 of the table. These sums can be accessed by the user via terminal 11 as indicators of the operation of the master control program scheduler routine and the control program execution. The MCP program pointer is reset to main control program A in the execution table at step 112.

The execution of the MCP scheduler routine now advances to step 114 where the inputs and outputs of the programmable controller are updated before running the next main control program. The update involves obtaining data from each input type I/O module 18 and 18' and storing the data in data file number 1 in section 41 of the shared system RAM 36 (see Figure 3). The update process also sends data from section 42 of the shared system RAM to each output type I/O module 18 and 18'. After the I/O update, any housekeeping tasks are performed at step 116 before returning to step 80 to execute another main control program listed in the MCP execution table. Thus, the MCP scheduler routine cycles through the excitation table, periodically selecting in a round robin manner each of the main control programs identified in the table by the user.

By incorporating the MCP execution table and scheduler routine in the programmable controller, multiple independent main control programs can be active, controlling the equipment at the same time. Previously, more than one program could only be executed at the same time by a single processor module if the programs were part of a sequential function chart. However, the execution of each such program was not independent as it was tied to the interpretation of the function chart. With the present system, multiple user control programs truly can be executed independently of one another. In fact, a separate ladder logic program can execute concurrently with a sequential function chart. The main control program scheduler routine provides a systematic process which enables several programs to be independently and concurrently executed on the same processor module without permitting one such program to monopolize the processor.

## Claims

1. A programmable controller (10) for operating machinery in response to the concurrent execution of a plurality of control programs comprising:
a first means (RAM 36, program files 45-48) for storing a plurality of user defined control programs;
a processor (60) for executing the control programs stored in said first means for storing;
a second means (RAM 36, status file 43: MCP execution table) for storing a list of identifiers of the stored control programs listed in the order that control programs are to be executed by said processor; and
a processor control means for sequentially selecting a control program from the list for execution by said processor (60),
**characterized in that**
said plurality of user defined control programs are independently executable main control programs (MPC) for governing the operation of a controlled equipment;
third means (RAM 36, word 70 in MCP execution table) are provided for storing an indication whether each control program identified in said second means (RAM 36, status file 43: MCP execution table) for storing is active for execution, the indication being alterable by a control program being executed by said processor; and
that said processor control means sequentially selects an active control program from said list for execution and it suspends the execution when a predetermined point in a selected control program is reached at which time another active control program is selected in a cyclical manner from the list.

2. The programmable controller as recited in claim 1 wherein a single control program may have multiple identifiers on the list stored in said second means (RAM 36, status file 43 : MCP execution table) for storing.

3. The programmable controller as recited in claim 1, wherein said second means (RAM 36, status file 43 : MCP execution table) for storing has a fixed number of locations within which identifiers can be stored.

4. The programmable controller as recited in claim 1, wherein said second means (RAM 36, status file 43: MCP execution table) for storing has a fixed number of locations for holding either an identifier of a control program or an indication that a control program is not identified at that location of the list.

5. The programmable controller according to any of the preceding claims, wherein: said control programs include a sequential function chart program having a plurality of sections with adjacent sections linked by a transition designating a condition that must exist in order for execution of the sequential function chart program to advance from one section to another section, and said control programs also including independently executable ladder logic programs; whereby (1) when the selected control program is a sequential function chart program said processor control means causes execution of one section, determines whether a transition condition associated with the one section exists, then suspends the execution of the sequential function chart program and signals said control means to select another control program, and (2) when the selected program is a ladder logic program said processor control means causes execution of the program until reaching a defined point in the ladder logic program, at which time further execution of the ladder logic program is suspended and said control means is signalled to select another control program.

6. The programmable controller as recited in claims 1 or 5 wherein said second means (RAM 36, status file 43: MCP execution table) for storing is accessible by an executing user defined control program for the addition and deletion of identifiers on the list.

7. The programmable controller as recited claim 5 further comprising means (RAM 36, MCP execution table) for indicating whether each control program in the ordered list is active or inactive; and wherein said control means only selects control programs which are indicated as being active.

8. The programmable controller as recited in claim 7 wherein said means (RAM 36, MCP excution table) for indicating can change an indication of whether a control program is active or inactive in response to the executions of a control program by said means for executing.

9. The programmable controller as recited in claim 5 wherein the defined point in the ladder logic program is at the completion of an executions can through that program.

10. The programmable controller to any of the preceding claims wherein said user defined control programs include a sequential function chart program having a plurality of sections with adjacent sections linked by a transition designating a condition that must exist in order for execution of the sequential function chart program to advance from one section to another section; whereby said processor control means cause execution of the user defined control program selected by said control means, when the selected program is a sequential function chart program said control means cause execution of one section, determines whether a transition condition associated with the one section exists, and then suspends the execution of the sequential function chart program and signals said control means to select another control program for execution.

11. The programmable controller as recited in claim 1, 5 or 10, further comprising an input/output interface means (38) for reading the status of sensing devices coupled to the programmable controller (20) and for sending control signals to operating devices coupled to the programmable controller, the reading and sending occurring after the execution of a control program is suspended.

12. The programmable controller as recited in claim 1, 5 or 10 further comprising means (67) for producing a measurement of how long an interval of time a control program is executing each time that the control program is selected from the list.

13. The programmable controller as recited in claim 12 wherein said second means (RAM 36, status file 43: MCP execution table) for storing also stores the measurement of the interval of time for each control program.

14. The programmable controller as recited in claim 12 further comprising means for determining whether a given measurement has the greatest magnitude of all such measurement for a specific control program; and means for storing, for each control program on the list, a measurement having the greatest magnitude.

15. The programmable controller as recited in claim 12 further comprising a third means for storing the measurement of the interval of time for each control program.

16. The programmable controller as recited in claim 15 further comprising means for determining whether a given measurement has the greatest magnitude of all such measurements for a specific control program; and if so, storing the given measurement in the third means for storing as a greatest magnitude interval for that control program.

17. The programmable controller as recited in claim 10 wherein a given control program can appear multiple times in the list stored in said second means for storing.

18. The programmable controller as recited in claim 10 wherein said second means (RAM 36, status file 43: MCP execution table) provides an indicia when a location for storing an identifier does not contain an identifier; and said control means responds to the indicia by choosing another location in said second means for storing.

## Patentansprüche

1. Programmierbare Steuerung (10) zum Betreiben einer maschinellen Einrichtung abhängig von der gleichzeitigen Ausführung einer Mehrzahl Steuerprogramme, aufweisend:
eine erste Einrichtung (RAM 36, Programmdateien 45-48) zum Speichern mehrerer vom Benutzer wählbarer Steuerprogramme;
einen Prozessor (60) zum Ausführen der in der ersten Speichereinrichtung gespeicherten Steuerprogramme;
eine zweite Einrichtung (RAM 36, Statusdatei 43: MCP Ausführungstabelle) zum Speichern einer Liste von Identifizierungen der gespeicherten Steuerprogramme, die in der Folge aufgelistet sind, in der die Steuerprogramme durch den Prozessor auszuführen sind; und
eine Prozessorsteuereinrichtung zur sequentiellen Auswahl eines Steuerprogramms aus der Liste für die Ausführung durch den Prozessor (60),
**dadurch gekennzeichnet,** daß
die Mehrzahl vom Benutzer wählbarer Steuerprogramme unabhängig ausführbare Hauptsteuerprogramme (MPC) zur Lenkung der Operation einer gesteuerten Einrichtung sind;
eine dritte Einrichtung (RAM 36, Wort 70 in der MCP Ausführungstabelle) zur Speicherung einer Anzeige darüber vorgesehen ist, ob jedes in der zweiten Speichereinrichtung (RAM 36, Statusdatei 43: MCP Ausführungstabelle) identifizierte Steuerprogramm für eine Ausführung aktiv ist, wobei die Anzeige durch ein vom Prozessor ausgeführtes Steuerprogramm abänderbar ist; und daß
die Prozessorsteuereinrichtung sequentiell ein aktives Steuerprogramm aus der Ausführungsliste auswählt und die Ausführung aussetzt, wenn ein vorbestimmter Punkt in einem ausgewählten Steuerprogramm erreicht ist, wobei zu diesem Zeitpunkt ein anderes aktives Steuerprogramm in einer zyklischen Weise aus der Liste ausgewählt wird.

2. Programmierbare Steuerung nach Anspruch 1, in welcher ein einzelnes Steuerprogramm mehrere Identifizierungen auf der in der zweiten Speichereinrichtung (RAM 36, Statusdatei 43: MCP Ausführungstabelle) gespeicherten Liste haben kann.

3. Programmierbare Steuerung nach Anspruch 1, in welcher die zweite Speichereinrichtung (RAM 36, Statusdatei 43: MCP Ausführungstabelle) eine feste Anzahl von Stellen aufweist, innerhalb derer Identifizierungen speicherbar sind.

4. Programmierbare Steuerung nach Anspruch 1, in welcher die zweite Speichereinrichtung (RAM 36, Statusdatei 43: MCP Ausführungstabelle) eine feste Anzahl von Stellen aufweist, die entweder eine Identifizierung eines Steuerprogramms oder eine Anzeige darüber halten, daß ein Steuerprogramm an dieser Stelle der Liste nicht identifiziert ist.

5. Programmierbare Steuerung nach einem der vorhergehenden Ansprüche in welcher: die Steuerprogramme ein sequentielles Funktionsdiagrammprogramm aufweisen, welches eine Mehrzahl von Abschnitten umfaßt, wobei aneinandergrenzende Abschnitte durch einen Übergang verknüpft sind, der eine Bedingung kennzeichnet, die vorhanden sein muß, damit die Ausführung des sequentiellen Funktionsdiagrammprogramms von einem Abschnitt zu einem anderen Abschnitt fortschreitet, und in welcher die Steuerprogramme auch unabhängig ausführbare Kontaktplanprogramme umfassen; wobei (1), wenn das ausgewählte Steuerprogramm ein sequentielles Funktionsdiagrammprogramm ist, die Prozessorsteuereinrichtung die Ausführung eines Abschnitts veranlaßt, ermittelt, ob eine mit diesem einen Abschnitt verknüpfte Übergangsbedingung vorliegt, dann die Ausführung des sequentiellen Funktionsdiagrammprogramms aussetzt und der Steuereinrichtung signalisiert, ein weiteres Steuerprogramm auszuwählen, und (2), wenn das ausgewählte Programm ein Kontaktplanprogramm ist, die Prozessorsteuereinrichtung die Ausführung des Programms bis zum Erreichen eines definierten Punktes im Kontaktplanprogramm veranlaßt, wobei zu diesem Zeitpunkt die weitere Ausführung des Kontaktplanprogramms ausgesetzt wird und der Steuereinrichtung signalisiert wird, ein anderes Steuerprogramm auszuwählen.

6. Programmierbare Steuerung nach Anspruch 1 oder 5, in welcher die zweite Steuereinrichtung (RAM 36, Statusdatei 43: MCP Ausführungstabelle) durch ein in der Ausführung befindliches benutzerwählbares Programm zugreifbar ist, um auf der Liste Identifizierungen hinzuzufügen und zu streichen.

7. Programmierbare Steuerung nach Anspruch 5, ferner aufweisend eine Einrichtung (RAM 36, MCP Ausführungstabelle) zur Anzeige darüber, ob jedes Steuerprogramm in der geordneten Liste aktiv oder inaktiv ist; und in welcher die Steuereinrichtung nur Steuerprogramme selektiert, die als aktiv angezeigt sind.

8. Programmierbare Steuerung nach Anspruch 7, in welcher die Einrichtung (RAM 36, MCP Ausführungstabelle) zur Anzeige eine Anzeige darüber, ob ein Steuerprogramm aktiv oder inaktiv ist, abhängig von der Ausführung eines Steuerprogramms durch die Ausführungseinrichtung ändern kann.

9. Programmierbare Steuerung nach Anspruch 5, in welcher der definierte Punkt im Kontaktplanprogramm bei Abschluß einer Ausführungsabtastung durch das Programm vorliegt.

10. Programmierbare Steuerung nach einem der vorhergehenden Ansprüche, in welcher die vom Benutzer wählbaren Steuerprogramme ein sequentielles Funktionsdiagrammprogramm umfassen, das mehrere Abschnitte aufweist, wobei aneinandergrenzende Abschnitte durch einen Übergang verknüpft sind, der eine Bedingung kennzeichnet, die vorliegen muß, damit die Ausführung des sequentiellen Funktionsdiagrammprogramms von einem Abschnitt zu einem anderen Abschnitt fortschreitet; wobei die prozessorsteuereinrichtung eine Ausführung des benutzerwählbaren Steuerprogramms veranlaßt, das durch die Steuereinrichtung ausgewählt ist, wobei, wenn das ausgewählte Programm ein sequentielles Funktionsdiagrammprogramm ist, die Steuereinrichtung die Ausführung eines Abschnitts veranlaßt, ermittelt, ob eine Übergangsbedingung, die mit diesem einen Abschnitt verknüpft ist, vorhanden ist, und dann die Ausführung des sequentiellen Funktionsdiagrammprogramms aussetzt und der Steuereinrichtung signalisiert, ein anderes Programm zur Ausführung auszuwählen.

11. Programmierbare Steuerung nach Anspruch 1, 5 oder 10, ferner aufweisend eine Eingangs/Ausgangs-Interfaceeinrichtung (38) zum Auslesen des Zustandes von Abfühleinrichtungen, die mit der programmierbaren Steuerung (20) verbunden sind und zur Übertragung von Steuersignalen an mit der programmierbaren Steuereinrichtung verbundene Steuereinrichtungen, wobei das Auslesen und Übertragen, nachdem die Ausführung eines Steuerprogramms ausgesetzt ist, erfolgen.

12. Programmierbare Steuerung nach Anspruch 1, 5 oder 10, ferner aufweisend eine Einrichtung (67) zum Erzeugen einer Meßgröße über die Länge eines Zeitintervalls, währenddessen ein Steuerprogramm ausgeführt wird, jedesmal, wenn das Steuerprogramm aus der Liste ausgewählt ist.

13. Programmierbare Steuerung nach Anspruch 12, in welcher die zweite Speichereinrichtung (RAM 36, Statusdatei 43: MCP Ausführungstabelle) auch die Meßgröße des Zeitintervalls für jedes Steuerprogramm speichert.

14. Programmierbare Steuerung nach Anspruch 12, ferner aufweisend eine Einrichtung, die ermittelt, ob eine gegebene Meßgröße den größten Betrag für sämtliche Meßgrößen für ein spezielles Steuerprogramm aufweist; und eine Einrichtung zur Speicherung für jedes Steuerprogramm auf der Liste einer Meßgröße, die den größten Betrag aufweist.

15. Programmierbare Steuerung nach Anspruch 12, ferner aufweisend eine dritte Einrichtung zum Speichern der Meßgröße des Zeitinvervalls für jedes Steuerprogramm.

16. Programmierbare Steuerung nach Anspruch 15, ferner aufweisend eine Einrichtung, die ermittelt, ob eine gegebene Meßgröße den größten Betrag sämtlicher solcher Meßgrößen für ein spezifisches Steuerprogramm aufweist; und falls dies zutrifft, die gegebene Meßgröße in der dritten Speichereinrichtung speichert, um sie als ein größtes Betragsintervall für dieses Steuerprogramm zu speichern.

17. Programmierbare Steuerung nach Anspruch 10, in welcher ein gegebenes Steuerprogramm mehrfach in der in der zweiten Speichereinrichtung gespeicherten Liste auftreten kann.

18. Programmierbare Steuerung nach Anspruch 10, in welcher die zweite Speichereinrichtung (RAM 36, Statusdatei 43: MCP Ausführungstabelle) eine Anzeigegröße vorsieht, wenn eine Stelle zur Speicherung einer Identifizierung keine Identifizierung enthält; und in welcher die Steuereinrichtung auf die Anzeigegröße anspricht, indem sie eine andere Stelle in der zweiten Speichereinrichtung auswählt.

## Revendications

1. Contrôleur programmable (10) pour actionner un mécanisme, en réponse à l'exécution simultanée d'une pluralité de programmes de commande, comprenant :
des premiers moyens (mémoire vive 36, fichiers de programme 45 à 48), pour stocker une pluralité de programmes de commande définis par l'utilisateur ;
un processeur (60), pour exécuter les programmes de commande stockés dans lesdits premiers moyens de stockage ;
des deuxièmes moyens (mémoire vive 36, fichier d'état 43 : table d'exécution de MPC), pour stocker une liste d'identifiants des programmes de commande stockés, dont la liste est fournie dans l'ordre où les programmes de commande doivent être exécutés par ledit processeur ; et
des moyens de commande de processeur, pour sélectionner séquentiellement un programme de commande dans la liste, pour exécution par ledit processeur (60),
caractérisé en ce que
ladite pluralité de programmes de commande définis par l'utilisateur sont des programmes de commande principaux exécutables indépendamment (MPC), destinés à régir le fonctionnement d'un équipement commandé ;
des troisièmes moyens (mémoire vive 36, mot 70 dans la table d'exécution de MCP) sont prévus pour stocker une indication selon laquelle chaque programme de commande identifié dans lesdits deuxièmes moyens de stockage (mémoire vive 36, fichier d'état 43 : table d'exécution de MCP), est actif pour exécution, l'indication pouvant être modifiée par un programme de commande exécuté par ledit processeur ; et
lesdits moyens de commande de processeur sélectionnent séquentiellement dans ladite liste un programme de commande actif pour exécution, et ils arrêtent l'exécution lorsqu'un point prédéterminé est atteint dans un programme de commande sélectionné, auquel moment un autre programme de commande actif est sélectionné dans la liste d'une manière cyclique.

2. Contrôleur programmable selon la revendication 1, dans lequel un simple programme de commande peut avoir plusieurs identifiants sur la liste stockée dans lesdits deuxièmes moyens de stockage (mémoire vive 36, fichier d'état 43 : table d'exécution de MCP).

3. Contrôleur programmable selon la revendication 1, dans lequel lesdits deuxièmes moyens de stockage (mémoire vive 36, fichier d'état 43 : table d'exécution de MCP) ont un nombre fixe d'emplacements, à l'intérieur desquels lesdits identifiants peuvent être stockés.

4. Contrôleur programmable selon la revendication 1, dans lequel lesdits deuxièmes moyens de stockage (mémoire vive 36, fichier d'état 43 : table d'exécution de MCP) ont un nombre fixe d'emplacements pour contenir soit un identifiant d'un programme de commande, soit une indication du fait qu'un programme de commande n'est pas identifié à cet emplacement de la liste.

5. Contrôleur programmable selon l'une quelconque des revendications précédentes, dans lequel lesdits programmes de commande comportent un programme graphique de fonction séquentielle ayant une pluralité de sections, des sections adjacentes étant liées par une transition indiquant un état qui doit exister pour que l'exécution du programme graphique de fonction séquentielle avance d'une section à une autre section, et lesdits programmes de commande comportant également des programmes logiques en échelle exécutables indépendamment ; de façon que (1) lorsque le programme de commande sélectionné est un programme graphique de fonction séquentielle, lesdits moyens de commande de processeur provoquent l'exécution d'une section, déterminent si une condition de transition associée à la section existe, puis interrompent l'exécution du programme graphique de fonction séquentielle, et indiquent auxdits moyens de commande de sélectionner un autre programme de commande, et (2) lorsque le programme de commande sélectionné est un programme logique en échelle, lesdits moyens de commande de processeur provoquent l'exécution du programme jusqu'à avoir atteint un point défini dans le programme logique en échelle, auquel moment l'avancement de l'exécution du programme logique en échelle est interrompu, et il est indiqué auxdits moyens de commande de sélectionner un autre programme de commande.

6. Contrôleur programmable selon la revendication 1 ou 5, dans lequel lesdits deuxièmes moyens de stockage (mémoire vive 36, fichier d'état 43 : table d'exécution de MCP) sont accessibles en exécutant un programme de commande défini par l'utilisateur pour l'addition et l'effacement d'identifiants sur la liste.

7. Contrôleur programmable selon la revendication 5, comprenant en outre des moyens (mémoire vive 36, table d'exécution de MCP), pour indiquer si chaque programme de commande de la liste ordonnée est actif ou inactif, et dans lequel lesdits moyens de commande ne sélectionnent que les programmes de commande qui sont indiqués comme étant actifs.

8. Contrôleur programmable selon la revendication 7, dans lequel lesdits moyens d'indication (mémoire vive 36, table d'exécution de MCP) peuvent modifier une indication du fait qu'un programme de commande est actif ou inactif, en réponse à l'exécution d'un programme de commande par lesdits moyens d'exécution.

9. Contrôleur programmable selon la revendication 5, dans lequel le point défini dans le programme logique en échelle se trouve à l'achèvement d'une exécution de ce programme.

10. Contrôleur programmable selon l'une quelconque des revendications précédentes, dans lequel lesdits programmes de commande définis par l'utilisateur comportent un programme graphique de fonction séquentielle ayant une pluralité de sections, des sections adjacentes étant liées par une transition indiquant un état qui doit exister pour que l'exécution du programme graphique de fonction séquentielle avance d'une section à une autre section ; de façon que lesdits moyens de commande de processeur provoquent l'exécution du programme de commande défini par l'utilisateur sélectionné par lesdits moyens de commande, lorsque le programme sélectionné est un programme graphique de fonction séquentielle, lesdits moyens de commande provoquent l'exécution d'une section, déterminent si un état de transition associé à la section existe, puis interrompent l'exécution du programme graphique de fonction séquentielle, et indiquent auxdits moyens de commande de sélectionner un autre programme de commande pour exécution.

11. Contrôleur programmable selon la revendication 1, 5 ou 10, comprenant en outre des moyens d'interface d'entrée/sortie (38), pour lire l'état des dispositifs de détection couplés au contrôleur programmable (20), et pour envoyer des signaux de commande aux dispositifs opératoires couplés au contrôleur programmable, la lecture et l'envoi s'effectuant après que l'exécution d'un programme de commande a été interrompue.

12. Contrôleur programmable selon la revendication 1, 5 ou 10, comprenant en outre des moyens (67) pour effectuer une mesure de la durée pendant laquelle s'exécute un programme de commande, à chaque fois que le programme de commande est sélectionné dans la liste.

13. Contrôleur programmable selon la revendication 12, dans lequel lesdits deuxièmes moyens de stockage (mémoire vive 36, fichier d'état 43 : table d'exécution de MCP) stockent également la mesure de la durée pour chaque programme de commande.

14. Contrôleur programmable selon la revendication 12, comprenant en outre des moyens pour déterminer si une mesure donnée a la plus grande amplitude de toutes ces mesures pour un programme de commande spécifique ; et des moyens pour stocker, pour chaque programme de commande de la liste, une mesure ayant la plus grande amplitude.

15. Contrôleur programmable selon la revendication 12, comprenant en outre des troisièmes moyens pour stocker la mesure de la durée pour chaque programme de commande.

16. Contrôleur programmable selon la revendication 15, comprenant en outre des moyens pour déterminer si une mesure donnée a la plus grande amplitude de toutes ces mesures pour un programme de commande spécifique ; et si tel est le cas, stocker la mesure donnée dans les troisièmes moyens de stockage, en tant qu'intervalle de plus grande amplitude pour ce programme de commande.

17. Contrôleur programmable selon la revendication 10, dans lequel un programme de commande donné peut apparaître plusieurs fois dans la liste stockée dans lesdits deuxièmes moyens de stockage.

18. Contrôleur programmable selon la revendication 10, dans lequel lesdits deuxièmes moyens de stockage (mémoire vive 36, fichier d'état 43 : table d'exécution de MCP) fournissent une indication lorsqu'un emplacement de stockage d'un identifiant ne contient pas d'identifiant ; et lesdits moyens de commande répondent à l'indication en choisissant un autre emplacement dans lesdits deuxièmes moyens de stockage.
